# FASCICULE DE BREVET EUROPEEN

(11) **EP 1 733 917 B1**
(45) Date de publication et mention de la délivrance du brevet: **08.07.2009**
(21) Numéro de dépôt: 06300472.5
(22) Date de dépôt: 15.05.2006
(51) Int. Cl.: B60N 2/66

(54) **Siège de véhicule automobile**
Fahrzeugsitz
Automotive vehicle seat

(30) Priorité: 15.06.2005 FR 0551630
(43) Date de publication de la demande: 20.12.2006
(73) Titulaire: Renault SAS, 92100 Boulogne Billancourt (FR)
(72) Inventeur: Mesa, Christophe, 92500 Rueil Malmaison (FR); Mazieres, Laurent, 75017 Paris (FR)

(56) Documents cités:
- WO-A-03/050426
- US-A1- 2005 011 299
- US-B1- 6 334 651

## Description

La présente invention concerne un siège de véhicule automobile comportant et plus particulièrement un siège de véhicule comportant une poignée de réglage des lombaires.

Des poignées de réglage des lombaires sont par exemple utilisées pour maintenir en position le réglage souhaité par un utilisateur de façon à améliorer le confort d'agrément dans un véhicule comme divulgué dans l'application US 6 334 651.

Ces poignées sont généralement positionnées le long du dossier du siège à une hauteur permettant à l'utilisateur de la manipuler facilement durant toutes las phases d'utilisation du siège du véhicule. Elles se fixent sur un embout prismatique faisant saillie à l'extérieur du dossier, qui est relié au mécanisme de réglage des lombaires intégré dans le dossier.

Au moment du montage, une pièce intermédiaire est préalablement montée sur l'embout pour recevoir la poignée. Cette pièce intermédiaire traverse de bout en bout la poignée de sorte que l'une des ses extrémités apparaît lorsque la poignée est fixée dessus. Un cache supplémentaire est appliqué sur la poignée pour dissimuler les défauts d'aspects et les jeux apparaissant entre la poignée, la pièce intermédiaire et l'embout.

Il en résulte que cet empilement de pièces est difficile à monter, ne présente pas les qualités d'aspect que peut attendre un utilisateur et engendre une détérioration progressive de la fixation à partir des jeux présents entre ces pièces.

Par ailleurs, de telles poignées comportent généralement un noyau métallique utilisé dans la fixation de l'ensemble sur l'embout. Une poignée composée d'éléments plastiques et métalliques mêlés ne facilite pas son recyclage et ne contribue pas au respect des normes en vigueur.

L'invention vise à palier ces inconvénients en proposant un siège comportant une poignée de réglage des appuis lombaires d'un occupant, qui garantit un montage efficace et sans jeu lorsqu'elle est montée sur un embout prismatique spécifique, tout en respectant l'environnement.

A cet effet, l'objet de l'invention concerne un siège de véhicule automobile comprenant une assise et un dossier qui est pourvu d'un dispositif de réglage lombaire actionné par un embout prismatique faisant sailli sur l'un des cotés du dossier, ledit embout étant muni d'une poignée de réglage, caractérisé en ce qu'une pièce intermédiaire comprend un premier moyen de fixation pour s'encastrer sur l'embout et un second moyen de fixation destiné à recevoir la poignée de réglage, de façon à solidariser la poignée sur l'embout..

Le siège de véhicule automobile proposé peut présenter les caractéristiques suivantes, individuellement ou en combinaison :
- l'embout prismatique comporte une rainure périphérique sur au moins une des ses faces ;
- le premier moyen de fixation est de forme prismatique creuse complémentaire de celle de l'embout et comporte au moins un clip coopérant avec la rainure de l'embout pour y fixer ladite pièce intermédiaire ;
- le clip du premier moyen de fixation est de forme complémentaire de celle de la rainure de l'embout, autorisant le détrompage de la pièce intermédiaire sur l'embout après fixation ;
- la poignée de réglage comporte un aménagement prismatique de forme complémentaire à celle de la pièce intermédiaire lui permettant de s'emboîter sur ladite pièce intermédiaire ;
- l'aménagement prismatique comporte au moins sur l'une de ses faces une ouverture recevant le second moyen de fixation ;
- le second moyen de fixation est une excroissance faisant saillie à l'extérieur de la pièce intermédiaire et coopérant avec au moins une ouverture de l'aménagement prismatique ; et
- la pièce intermédiaire et la poignée de réglage sont en matériau recyclable, et de préférence en matière plastique.

La présente invention concerne en outre un procédé de montage d'un siège de véhicule automobile selon l'une des revendications précédentes, caractérisé en ce qu'on fixe la pièce intermédiaire sur l'embout prismatique par l'intermédiaire du premier moyen de fixation et on fixe ensuite la poignée de réglage sur l'ensemble constitué de l'embout et de la pièce intermédiaire.

D'autres caractéristiques et avantages de l'invention apparaîtront à la lecture de la description détaillée d'un mode de réalisation pris à titre d'exemple non limitatif, en liaison avec les dessins annexés, sur lesquels :
- la figure 1 est une représentation schématique en perspective d'un siège muni d'une poignée de réglage des lombaires d'un occupant d'un siège;
- la figure 2 est une représentation schématique en perspective éclatée de l'ensemble du dispositif de fixation de la poignée ;
- la figure 3 est une représentation schématique en perspective de la poignée de réglage ;
- la figure 4 est une représentation schématique d'une section éclatée de l'ensemble du dispositif de fixation de la poignée ; et
- la figure 5 est une représentation schématique d'une section de l'ensemble du dispositif de fixation de la poignée en position assemblée.

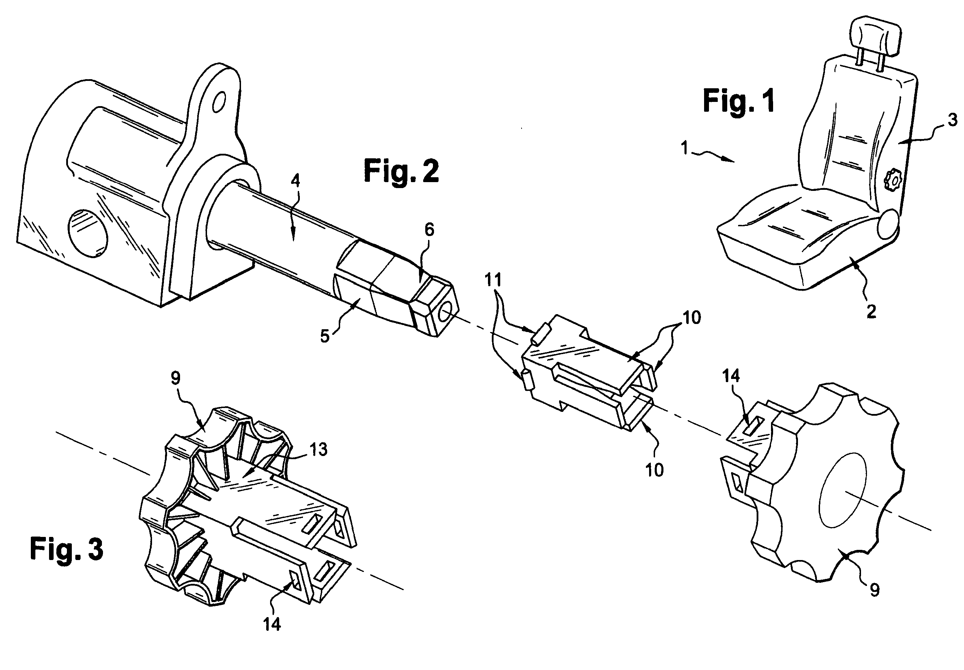

La figure 1 représente un siège 1 dans l'habitacle d'un véhicule automobile, comportant une assise 2 et un dossier 3. Le dossier 3 est muni d'un dispositif de réglage de l'appui des lombaires d'un occupant du siège, de façon à améliorer son confort d'agrément de conduite par exemple.

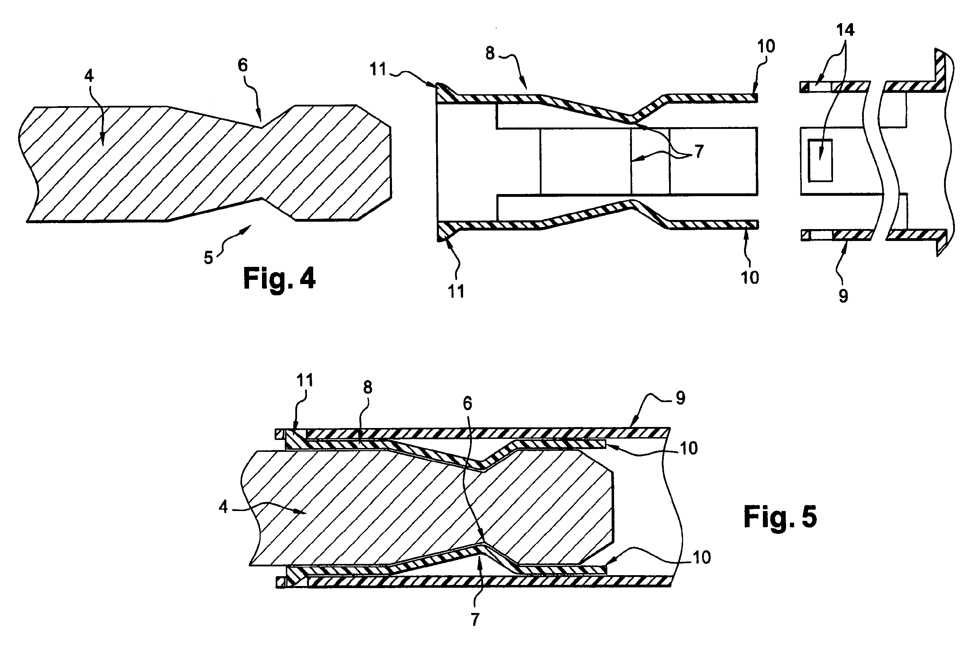

Ce dispositif, non représenté, est actionné par un utilisateur au moyen d'un embout 4 faisant saillie à l'extérieur du dossier 3. Cet embout 4 est positionné le long du dossier 3 de façon à ce que l'utilisateur puisse y accéder facilement au cours des phases d'utilisation du siège du véhicule. L'embout 4 présente en outre une rainure périphérique 6 sur au moins une des ses faces 5 à son extrémité libre, destinée à recevoir une forme complémentaire 7 d'une pièce intermédiaire 8, telle que représentées sur les figures 2 et 4.

En effet, l'extrémité de l'embout métallique 4 est de forme prismatique et la pièce intermédiaire 8 vient se cliper sur cet embout 4 pour recevoir une poignée 9 comme le représente les figures 4 et 5.

Pour réaliser la liaison entre l'embout 4 et la poignée 9, la pièce intermédiaire 8 comporte au moins un premier moyen de fixation 10 comportant la forme complémentaire 7 de la rainure périphérique 6 de l'embout 4. Le moyen de fixation 10 a la forme de clips élastiques autorisant le détrompage de la pièce intermédiaire 8 sur l'embout 4. Cette pièce intermédiaire 8 comporte un second moyen de fixation comportant des excroissances 11 sur au moins l'une des ses faces à son extrémités.

Ces excroissances sont destinées à coopérer avec la poignée 9. Celle-ci comporte un aménagement 13 pour recevoir la pièce intermédiaire 8. Cet aménagement 13 est de forme prismatique et permet à la poignée 9 de venir coulisser, avec un minimum de jeu, sur la pièce intermédiaire 8 pour venir se fixer. Sur au moins une des faces de l'aménagement 13, des ouvertures 14 coopèrent avec les excroissances 11 de la pièces intermédiaire 8. La fixation de la poignée 9 sur la pièce intermédiaire 8 est réalisée grâce aux excroissances 11 et aux ouvertures 14 de telle sorte que la poignée est encastrée définitivement sur l'embout 4.

La poignée décrite peut également s'appliquer à tout type de dispositif de réglage ou de manipulation nécessitant la fixation d'une poignée spécifique.

Le siège 1 de véhicule automobile comporte donc une poignée 9 de réglage des appuis des lombaires d'un occupant qui se fixe facilement sur un embout 4 en garantissant une utilisation prolongée du dispositif sans voir apparaître des jeux de disfonctionnement. Ce système de fixation permet en outre d'optimiser le montage de la poignée 9 et d'améliorer la finition d'un tel dispositif.

## Revendications

1. Siège (1) de véhicule automobile comprenant une assise (2) et un dossier (3) qui est pourvu d'un dispositif de réglage lombaire actionné par un embout prismatique (4) comportant une rainure périphérique (6) sur au moins une des ses faces (5), et faisant sailli sur l'un des cotés du dossier (3), ledit embout (3) étant muni d'une poignée de réglage (9), une pièce intermédiaire comprenant un premier moyen de fixation (10) pour s'encastrer sur l'embout (4) et un second moyen de fixation (11) destiné à recevoir la poignée de réglage (9), de façon à solidariser la poignée (9) sur l'embout (4).
**caractérisé en ce** le premier moyen de fixation (10) est de forme prismatique creuse complémentaire de celle de l'embout (4) et comporte au moins un clip (7) coopérant avec la rainure (6) de l'embout (4) pour y fixer ladite pièce intermédiaire.

2. Siège (1) de véhicule automobile selon la revendication précédente, **caractérisé en ce que** le clip (7) du premier moyen de fixation (10) est de forme complémentaire de celle de la rainure (6) de l'embout (4), autorisant le détrompage de la pièce intermédiaire sur l'embout (4) après fixation.

3. Siège (1) de véhicule automobile selon l'une des revendications précédentes, **caractérisé en ce que** la poignée de réglage (9) comporte un aménagement prismatique (13) de forme complémentaire à celle de la pièce intermédiaire lui permettant de s'emboîter sur ladite pièce intermédiaire.

4. Siège (1) de véhicule automobile selon la revendication 3, **caractérisé en ce que** l'aménagement prismatique (13) comporte au moins sur l'une de ses faces une ouverture (14) recevant le second moyen de fixation (11).

5. Siège (1) de véhicule automobile selon l'une des revendications 3 ou 4, **caractérisé en ce que** le second moyen de fixation (11) est une excroissance faisant saillie à l'extérieur de la pièce intermédiaire et coopérant avec au moins une ouverture(14) de l'aménagement prismatique (13).

6. Siège (1) de véhicule automobile selon l'une des revendications précédentes, **caractérisé en ce que** la pièce intermédiaire et la poignée de réglage (9) sont en matériau recyclable, et de préférence en matière plastique.

7. Procédé de montage d'un siège (1) de véhicule automobile selon l'une des revendications précédentes, **caractérisé en ce qu'**on fixe la pièce intermédiaire sur l'embout prismatique (4) par l'intermédiaire du premier moyen de fixation (10) et on fixe ensuite la poignée de réglage (9) sur l'ensemble constitué de l'embout (4) et de la pièce intermédiaire.

## Claims

1. Motor vehicle seat (1) comprising a horizontal squab (2) and a backrest (3) provided with a lumbar adjustment device operated by a prism-shaped endpiece (4) which has a peripheral groove (6) on at least one of its faces (5) and which projects from one of the sides of the backrest (3), said endpiece (4) being provided with an adjustment handle (9), an intermediate part comprising a first fixing means (10) for fitting onto the endpiece (4), and a second fixing means (11) designed to take the adjustment handle (9), in such a way as to lock the handle (9) to the endpiece (4),
said seat being **characterized in that** the first fixing means (10) is of a hollow prism shape complementary to that of the endpiece (4) and has at least one catch (7) engaging with the groove (6) on the endpiece (4) so as to fix said intermediate part to it.

2. Motor vehicle seat (1) according to the preceding claim, **characterized in that** the catch (7) on the first fixing means (10) is complementary in shape to the groove (6) on the endpiece (4), allowing polarization of the intermediate part on the endpiece (4) after fixing.

3. Motor vehicle seat (1) according to either of the preceding claims, **characterized in that** the adjustment handle (9) comprises a prism-shaped structure (13) complementary in shape to the intermediate part, allowing it to fit onto said intermediate part.

4. Motor vehicle seat (1) according to Claim 3, **characterized in that** the prism-shaped structure (13) has on at least one of its faces an opening (14) that takes the second fixing means (11).

5. Motor vehicle seat (1) according to either of Claims 3 and 4, **characterized in that** the second fixing means (11) is a protrusion projecting out from the intermediate part and engaging with at least one opening (14) in the prismatic structure (13).

6. Motor vehicle seat (1) according to one of the preceding claims, **characterized in that t**he intermediate part and the adjustment handle (9) are made of recyclable material, preferably plastic.

7. Method of assembling a motor vehicle seat (1) according to one of the preceding claims, **characterized in that** the intermediate part is fixed to the prism-shaped endpiece (4) by means of the first fixing means (10), and the adjustment handle (9) is then fixed to the assembly made up of the endpiece (4) and the intermediate part.

## Patentansprüche

1. Kraftfahrzeugsitz (1) mit einem Sitzteil (2) und einer Rückenlehne (3), der mit einer verstellbaren Lendenstütze versehen ist, die durch ein prismatisches Endstück (4) betätigt wird, in dem eine Umfangsnut (6) in mindestens einer seiner Flächen (5) ausgebildet ist und das an einer der Seiten der Rückenlehne (3) vorragt, wobei das Endstück (4) mit einem Einstellgriff (9) versehen ist, wobei ein Zwischenteil ein erstes Befestigungsmittel (10), um auf das Endstück (4) aufgesetzt zu werden, und ein zweites Befestigungsmittel (11), das den Einstellgriff (9) aufnehmen soll, enthält, um den Griff (9) fest am Endstück (4) anzubringen,
**dadurch gekennzeichnet, dass** das erste Befestigungsmittel (10) eine hohle prismatische Form aufweist, die zur der des Endstücks (4) komplementär ist, und mindestens eine Klammer (7) enthält, die mit der Nut (6) des Endstücks (4) zusammenwirkt, um dort das Zwischenstück zu befestigen.

2. Kraftfahrzeugsitz (1) nach dem vorhergehenden Anspruch, **dadurch gekennzeichnet, dass** die Klammer (7) des ersten Befestigungsmittels (10) eine Form aufweist, die zu der der Nut (6) des Endstücks (4) komplementär ist, um die Lagensicherung des Zwischenstücks am Endstück (4) nach der Befestigung zu gestatten.

3. Kraftfahrzeugsitz (1) nach einem der vorhergehenden Ansprüche, **dadurch gekennzeichnet, dass** der Einstellgriff (9) eine prismatische Ausbildung (13) aufweist, deren Form komplementär zu der des Zwischenstücks ist und ihm gestattet, auf das Zwischenstück aufgeschoben zu werden.

4. Kraftfahrzeugsitz (1) nach Anspruch 3, **dadurch gekennzeichnet, dass** die prismatische Ausbildung (13) an mindestens einer ihrer Flächen eine Öffnung (14) aufweist, die das zweite Befestigungsmittel (11) aufnimmt.

5. Kraftfahrzeugsitz (1) nach einem der Ansprüche 3 oder 4, **dadurch gekennzeichnet, dass** das zweite Befestigungsmittel (11) eine Ausstülpung ist, die an der Außenseite des Zwischenstücks vorsteht und mit mindestens einer Öffnung (14) der prismatischen Ausbildung (13) zusammenwirkt.

6. Kraftfahrzeugsitz (1) nach einem der vorhergehenden Ansprüche, **dadurch gekennzeichnet, dass** das Zwischenstück und der Einstellgriff (9) aus einem recycelbaren Material und vorzugsweise aus Kunststoffmaterial bestehen.

7. Verfahren zur Befestigung eines Kraftfahrzeugsitzes (1) nach einem der vorhergehenden Ansprüche, **dadurch gekennzeichnet, dass** man das Zwischenstück mittels des ersten Befestigungsmittels (10) an dem prismatischen Endstück (4) befestigt und danach den Einstellgriff (9) an der aus dem Endstück (4) und dem Zwischenstück bestehenden Anordnung befestigt.
